# EUROPÄISCHE PATENTSCHRIFT

(11) **EP 2 667 219 B1**
(45) Veröffentlichungstag und Bekanntmachung des Hinweises auf die Patenterteilung: **27.09.2017**
(21) Anmeldenummer: 13161284.8
(22) Anmeldetag: 27.03.2013
(51) Int. Cl.: G01S 13/06, G01S 13/93

(54) **Detektion von Radarobjekten mit einem Radarsensor eines Kraftfahrzeugs**
Detection of radar objects with a radar sensor of a motor vehicle
Détection d'objets radar avec un capteur radar d'un véhicule automobile

(30) Priorität: 25.05.2012 DE 102012208852
(43) Veröffentlichungstag der Anmeldung: 27.11.2013
(73) Patentinhaber: ROBERT BOSCH GMBH, 70442 Stuttgart (DE)
(72) Erfinder: Gross, Volker, 71254 Ditzingen (DE); Schoor, Michael, 70195 Stuttgart (DE)

(56) Entgegenhaltungen:
- WO-A1-2006/010662
- JP-A- 2009 079 917
- US-A1- 2012 119 937

## Beschreibung

Die Erfindung betrifft ein System und ein Verfahren zur Detektion von Radarobjekten mit einem winkelauflösenden Radarsensor eines Kraftfahrzeugs in Gegenwart eines seitlich neben der eigenen Fahrspur in Fahrtrichtung ausgedehnten, Radarwellen reflektierenden Gegenstands, wie beispielsweise einer Leitplanke.

### STAND DER TECHNIK

Radarsensoren werden beispielsweise in ACC-Systemen (Adaptive Cruise Control) für Kraftfahrzeuge eingesetzt und dienen dazu, die Positionen und Relativgeschwindigkeiten von Radarobjekten zu bestimmen, so dass dann im Rahmen einer adaptiven Geschwindigkeitsregelung die Geschwindigkeit des eigenen Fahrzeugs an die Geschwindigkeit eines vorausfahrenden Fahrzeugs angepasst und der Abstand zu dem vorausfahrenden Fahrzeug auf einen geeigneten Wert geregelt werden kann.

Ein derartiger Radarsensor weist beispielsweise mehrere Kanäle auf, denen jeweils wenigstens ein Antennenelement mit einer jeweiligen Richtcharakteristik und eine Auswerteeinrichtung zugeordnet ist. Die in den verschiedenen Kanälen empfangenen Hochfrequenzsignale werden durch Mischen mit einer Referenzfrequenz, unter Erhaltung der Phasen- und Amplitudenbeziehungen, in Niederfrequenzsignale umgewandelt, die in einer Auswerteelektronik ausgewertet werden. Beispielsweise können die Niederfrequenzsignale mit Analog/Digital-Umsetzern digitalisiert und dann digital weiterverarbeitet werden. Durch Auswertung der Phasenbeziehungen und/oder Auswertung der Amplitudenbeziehungen zwischen den in den verschiedenen Kanälen ist es möglich, den Richtungswinkel eines georteten Radarobjektes zu bestimmen.

Jedes Radarobjekt zeichnet sich im Frequenzspektrum eines Kanals in der Form eines Peaks ab, dessen Lage von der Dopplerverschiebung und damit von der Relativgeschwindigkeit des Radarobjekts abhängig ist. Wenn die Sendefrequenz des Radarsystems moduliert wird, wie beispielsweise bei einem FMCW-Radar (Frequency Modulated Continuous Wave), ist die Lage der Peaks auch von der Laufzeit der Radarsignale abhängig. Wenn das gesendete Signal in einem Messzyklus unterschiedliche, geeignet gewählte Frequenzrampen aufweist, lässt sich aus den Frequenzen der erhaltenen Peaks die Relativgeschwindigkeit des Objekts und der Abstand des Objekts berechnen.

DE 10 2004 036 580 A1 beschreibt ein Verfahren und eine Vorrichtung zur Objektdetektion bei einem Fahrzeug, das mit einer Objektsensorik ausgestattet ist, welche elektromagnetische Wellen aussendet und an Objekten innerhalb des Detektionsbereichs reflektierte Wellen empfängt. Ein bewegtes Objekt in Form eines vorausfahrenden Fahrzeugs wird mittels einer direkten Objektreflexion gemessen, bei der von der Objektsensorik ausgesandte Mikrowellenstrahlung am Objekt reflektiert und unmittelbar von der Objektsensorik wieder empfangen wird. In einer Situation, in der ein entlang der Fahrbahn ausgedehnter Gegenstand, etwa eine Leitplanke, vorhanden ist, an dem eine weitere Reflexion der Messstrahlung stattfindet, kann die von der Objektsensorik ausgesandte Messstrahlung am vorausfahrenden Fahrzeug und nochmals an der Leitplanke reflektiert und als indirekte Objektreflexion von der Objektsensorik empfangen werden. Diese indirekte Objektreflexion wird von der Objektsensorik als Scheinziel erkannt, da der Fahrbahnrand geschätzt oder gemessen wird und erkannt wird, dass das Scheinziel jenseits des Fahrbahnrandes ist. Ein scheinbarer realer Objektaufenthaltsort, der durch den Aufenthaltsort des Scheinziels und durch einen berechneten Reflexionspunkt an der Leitplanke berechenbar ist, wird zur Plausibilisierung der direkt gemessenen Objektreflexionen herangezogen.

US 2012/119937 A1 beschreibt eine Radarvorrichtung eines Fahrzeugs, bei der ein Reflektionsfaktor einer Seitenwand neben dem Fahrzeug anhand eines Kamerabildes geschätzt wird und eine erfasste Position eines Objektes in der Links-Rechts-Richtung korrigiert wird.

### OFFENBARUNG DER ERFINDUNG

In einer Situation mit Mehrwegeausbreitung der Radarsignale, bei der neben direkten Objektreflexionen auch indirekte Objektreflexionen empfangen werden, bei denen von einem zu ortenden Radarobjekt reflektierte Radarsignale beispielsweise an einer Leitplanke seitlich neben der Fahrbahn zusätzlich reflektiert werden, kann die Erkennung von vorausfahrenden Fahrzeugen als Radarobjekte oder als Scheinziele dadurch erschwert oder verhindert werden, dass geschätzte Objektwinkel bzw. Scheinziel-Objektwinkel gestört und verrauscht sind. Die Genauigkeit und Zuverlässigkeit der Winkelbestimmung kann insbesondere bei hohen Entfernungen beeinträchtigt werden. Dadurch kann es beispielsweise vorkommen, dass ein Richtungswinkel eines real existierenden, bewegten Radarobjektes bestimmt wird, der nicht der tatsächlichen Position
des Radarobjektes entspricht, sondern einer in Richtung der Leitplanke seitlich versetzten Position entspricht, beispielsweise einer Position zwischen der tatsächlichen Objektposition und einer Scheinziel-Position eines gespiegelten Objektes. Dies kann sich beispielsweise nachteilig auf eine auf der Objekterkennung basierende Abstandsregelfunktion eines adaptiven Fahrgeschwindigkeitsreglers auswirken.

Aufgabe der Erfindung ist es, die Detektion von bewegten Radarobjekten in Gegenwart einer Leitplanke oder eines anderen, seitlich neben der eigenen Fahrspur in Fahrtrichtung ausgedehnten, Radarwellen reflektierenden Gegenstandes zu verbessern.

Ein Beitrag zur Lösung dieser Aufgabe wird erfindungsgemäß durch ein Verfahren nach Anspruch 1 geleistet. Dabei kann es sich bei dem in Fahrtrichtung ausgedehnten Gegenstand beispielsweise um einen seitlich entlang einer Fahrbahn ausgedehnten Gegenstand handeln, wie etwa eine Leitplanke. Bei der gemessenen Positionsverteilung kann es sich beispielsweise um eine Verteilung einer Winkelposition, insbesondere einem Azimutwinkel, oder um eine Verteilung einer lateralen Position handeln, beispielsweise einer lateralen Position (Querversatz) bezogen auf das eigene Fahrzeug. Indem die gemessene Positionsverteilung mit einem Modell einer Positionsverteilung verglichen wird, können Eigenschaften der Mehrwegeausbreitung der Radarsignale und ihre Auswirkungen auf die empfangenen Signale bei der Auswertung der empfangenen Radarsignale explizit berücksichtigt werden. Die Qualität einer Objektverfolgung, auch als Objekttracking bezeichnet, kann dadurch verbessert werden. So kann es beispielsweise ermöglicht werden, auch bei einer hohen Objektentfernung, bei der anhand der empfangenen Radarsignale ein reales Objekt nicht von einem an einer Leitplanke gespiegelten Spiegelobjekt trennbar ist, das reale Objekt zu detektieren.

Das zum Vergleich mit der gemessenen Positionsverteilung herangezogene Modell kann bei einem gegebenen Abstand vom Objekt beispielsweise eine Verteilung einer Winkelposition, insbesondere eines Azimutwinkels, oder eine Verteilung einer lateralen Position beschreiben, beispielsweise einer lateralen Position (Querversatz) bezogen auf das eigene Fahrzeug. Das Modell einer erwarteten Positionsverteilung kann beispielsweise aus einem oder mehreren charakteristischen Merkmalen der erwarteten Positionsverteilung bestehen, oder es kann eine modellierte Positionsverteilung umfassen. Eine modellierte Positionsverteilung kann beispielsweise direkt mit einer gemessenen Positionsverteilung verglichen werden, oder es kann mindestens eine der beiden Positionsverteilungen in einer umgerechneten Form zum Vergleich herangezogen werden.

Vorzugsweise umfasst das Verfahren, vor dem Schritt des Vergleichens, den Schritt des Bestimmens der gemessenen Positionsverteilung basierend auf einer fortlaufend aktualisierten Historie von Positionen, die Richtungswinkeln empfangener, von dem Radarobjekt reflektierter Radarsignale des Radarsensors entsprechen. Beispielsweise kann in jedem Messzyklus des Radarsensors im Falle einer Objektreflexion wenigstens ein Richtungswinkel bestimmt werden, und die gemessene Positionsverteilung kann Positionen entsprechend den in mehreren Messzyklen gemessenen Richtungswinkeln umfassen. Beispielsweise kann die gemessene Positionsverteilung basierend auf empfangenen Radarsignalen aus den jeweils n letzten Messzyklen bestimmt werden, wobei n eine Zahl ist, die eine Breite eines gleitenden Zeitfensters der Historie der Positionen bestimmt.

Vorzugsweise umfasst das Verfahren weiter den Schritt: Bestimmen einer Modellphase des Modells, basierend auf dem Ergebnis des Vergleichs, wobei die Modellphase bestimmt wird aus mehreren Modellphasen des Modells. Die genannten mehreren Modellphasen können beispielsweise Modellphasen umfassen, die erwarteten Positionsverteilungen entsprechen, die sich in Bezug auf ein Vorhandensein und/oder eine Ausgeprägtheit einer Absenkung der Verteilung in einem Übergangsbereich zwischen Positionen, die einer Position des Radarobjektes und einer Position eines Spiegelobjektes entsprechen, unterscheiden. Die Modellphasen können sich somit in Bezug auf eine Trennbarkeit von Peaks der erwarteten Positionsverteilung unterscheiden, die einer Position des Radarobjektes und einer Position eines Spiegelobjektes entsprechen. Beispielsweise kann in wenigstens einer Modellphase eine zumindest zwischen einer Position des Radarobjektes und einer Position eines Spiegelobjektes gleichförmig streuende Positionsverteilung erwartet werden, und in wenigstens einer Modellphase kann eine Positionsverteilung mit zwei getrennten, jeweils einer Position des Radarobjektes und einer Position eines Spiegelobjektes entsprechenden Peaks erwartet werden, wobei letztere Positionsverteilung bei einem kleineren Abstand vom Radarobjekt erwartet wird als die zuvor genannte Positionsverteilung.

Die genannten mehreren Modellphasen können beispielsweise Modellphasen umfassen, die erwarteten Positionsverteilungen entsprechen, die jeweils eine Streuung von Werten der Verteilung um eine Position entsprechend einem Radarobjekt und um eine Position entsprechend einem Spiegelobjekt aufweisen und sich hinsichtlich einer von dem Abstand vom Radarobjekt abhängigen Streubreite unterscheiden.

Weiter wird ein Beitrag zur Lösung der genannten Aufgabe erfindungsgemäß durch eine System zur Detektion von Radarobjekten mit einem winkelauflösenden Radarsensor eines Kraftfahrzeugs in Gegenwart eines seitlich neben der eigenen Fahrspur in Fahrtrichtung ausgedehnten, Radarwellen reflektierenden Gegenstands geleistet, wobei das System aufweist:
- eine Einheit, die dazu eingerichtet ist, eine gemessene Positionsverteilung zu bestimmen, die eine Verteilung von Richtungswinkeln empfangener, von einem Radarobjekt reflektierter Radarsignale des Radarsensors entspricht,
- eine Einheit, die dazu eingerichtet ist, die gemessene Positionsverteilung mit einem Modell einer unter Berücksichtigung des Vorhandenseins des neben der eigenen Fahrspur in Fahrtrichtung ausgedehnten Gegenstands erwarteten, von einem Abstand vom Radarobjekt abhängigen Positionsverteilung zu vergleichen; und
- eine Einheit, die dazu eingerichtet ist, basierend auf dem Ergebnis des Vergleichs eine Position eines Radarobjektes zu bestimmen.

Weitere vorteilhafte Ausgestaltungen der Erfindung sind jeweils in den Unteransprüchen angegeben.

### KURZE BESCHREIBUNG DER ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung einer Verkehrssituation mit Mehrwegereflexion von Radarsignalen von einem Radarobjekt;
- Fig. 2: ein schematisches Blockschaltbild eines Kraftfahrzeug-Sensorsystems;
- Fig. 3 bis 5: schematische Darstellungen von gemessenen Positionsverteilungen, die Richtungswinkeln empfangener Radarsignale entsprechen;
- Fig. 6: eine schematische Darstellung von Modellphasen eines Modells für eine Positionsverteilung; und
- Fig. 7: ein Ablaufdiagramm einer Ausführungsform eines Verfahrens zur Objektdetektion.

### BESCHREIBUNG VON AUSFÜHRUNGSFORMEN

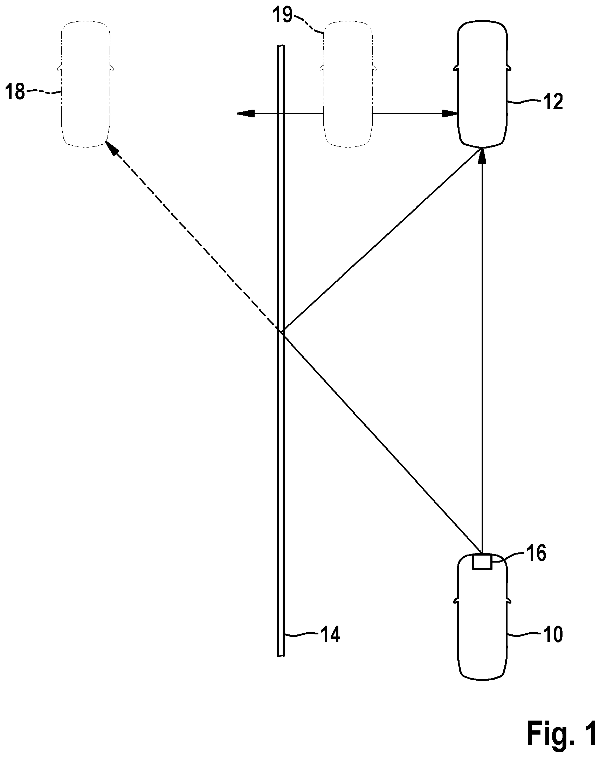

Fig. 1 zeigt eine Verkehrssituation mit einem eigenen Fahrzeug 10 und einem zu ortenden Radarobjekt 12 in Form eines unmittelbar vorausfahrenden Fahrzeugs. Die beiden Fahrzeuge befinden sich auf derselben Fahrbahn. Seitlich entlang der Fahrbahn erstreckt sich ein Radarwellen reflektierender Gegenstand 14 in Form einer Leitplanke.

Das Fahrzeug 10 ist mit einem winkelauflösenden Radarsensor 16 ausgestattet, der im Frontbereich des Fahrzeugs 10 angeordnet ist und dazu eingerichtet ist, Radarobjekte in einem Sensorerfassungsbereich vor dem eigenen Fahrzeug 10 zu detektieren. Beispielsweise handelt es sich um einen FMCW-Radarsensor, bei dem die Frequenz eines gesendeten Radarsignals periodisch moduliert wird, insbesondere in Form wenigstens einer Frequenzrampe, beispielsweise vier Rampen je Messzyklus. Der Radarsensor 16 hat mehrere Antennenelemente mit unterschiedlichen Richtcharakteristiken, die eine Bestimmung eines Richtungswinkels eines empfangenen Radarsignals gestatten.

Fig. 1 zeigt schematisch mit einem das eigene Fahrzeug 10 und das Radarobjekt 12 geradlinig verbindenden Pfeil einen ersten Ausbreitungsweg, über den eine direkte Radarreflexion vom Radarobjekt 12 empfangen wird. Weiter ist schematisch ein zweiter Ausbreitungsweg über eine Reflexion an dem Gegenstand 14 dargestellt, über den eine indirekte Objektreflexion vom Radarobjekt 12 empfangen wird. Der Richtungswinkel, unter dem die indirekte Objektreflexion empfangen wird, entspricht einem Spiegelobjekt 18 an einer Position hinter Leitplanke. Die Reflexion erfolgt also quer zur Fahrtrichtung, insbesondere an einer in Fahrtrichtung ausgedehnten Seite des Gegenstands 14.

Der Radarsensor 16 ist beispielsweise dazu eingerichtet, basierend auf empfangenen, von einem Radarobjekt 12 reflektierten Radarsignalen des Radarsensors 16 den in einem Messzyklus des Radarsensors 16 empfangenen Radarsignalen jeweils wenigstens einen Richtungswinkel zuzuordnen, aus dem das Radarsignal empfangen wird. Wenn bei größeren Entfernungen zwischen dem eigenen Fahrzeug 10 und dem zu ortenden Radarobjekt 12 die Trennfähigkeit des Radarsensors 16 bezüglich des Richtungswinkels der empfangenen Radarsignale abnimmt, kann es dazu kommen, dass den empfangenen Objektreflexionen Richtungswinkel zugeordnet werden, die von den tatsächlichen Richtungswinkels des Radarobjektes 12 und des Spiegelobjektes 18 abweichen und insbesondere einer Position eines sogenannten Geisterobjekts 19 in einem Winkelbereich zwischen dem Radarobjekt 12 und dem Spiegelobjekt 18 entsprechen können.

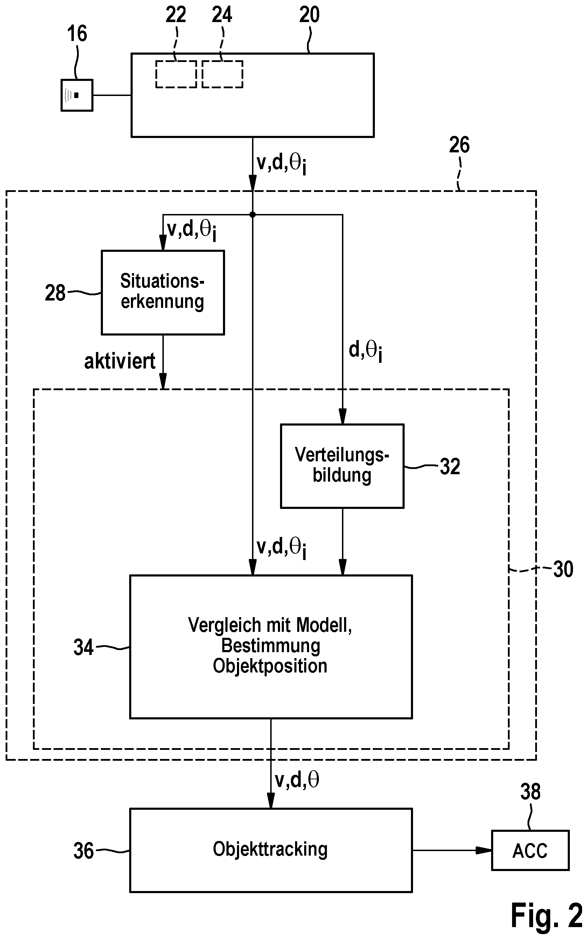

Fig. 2 zeigt ein System zur Detektion von Radarobjekten in Form eines Kraftfahrzeug-Sensorsystems. Das System umfasst eine Sensorik, die den Radarsensor 16 und eine digitale Signalverarbeitungseinheit 20 umfasst. Die Signalverarbeitungseinheit 20 ist in an sich bekannter Weise dazu ausgebildet, Ausgangssignale der Kanäle des Radarsensors 16 auszuwerten und aus den von den verschiedenen Empfangsantennenelementen des Radarsensors 16 erhaltenen Niederfrequenzsignalen zu einem vom Radarsensor 16 erfassten Radarobjekt eine Relativgeschwindigkeit v, einen Objektabstand d und wenigstens einen Richtungswinkel zu bestimmen. Die gemessenen Werte für den Abstand d und die Relativgeschwindigkeit v streuen beispielsweise um die Werte der Weglängen bzw. Relativgeschwindigkeiten des Radarobjektes 12 und des Spiegelobjektes 18.

Die Signalverarbeitungseinheit 20 umfasst einen Einzielschätzer 22, der dazu eingerichtet ist, für jede Frequenzrampe eines Messzyklus einen Richtungswinkel eines Radarechos zu bestimmen. Beispielsweise werden normierte Amplituden und Phasen von Peaks der Zwischenfrequenzsignale mit entsprechenden Antennendiagrammen für die Antennenelemente des Radarsensors 16 abgeglichen, so dass sich anhand einer bekannten Winkelabhängigkeit der Amplituden und Phasen die Azimutwinkel der georteten Objekte bestimmen lassen. Hierzu wird ein eindimensionaler, d.h. in Abhängigkeit des Winkels berechneter Suchraum von Amplituden- und Phasendifferenzen durchsucht, um eine Korrelation zwischen dem gemessenen Signal und einem für einen Winkel erwarteten Signal aufzufinden. Ein Peak der Korrelation kennzeichnet dann den wahrscheinlichsten Wert des Azimutwinkels.

Weiter umfasst die Signalverarbeitungseinheit 20 optional einen Zweizielschätzer 24, der dazu eingerichtet ist, für wenigstens eine Frequenzrampe in einem Messzyklus zwei Richtungswinkel eines Radarechos zu bestimmen, wenn sich die Objektreflexion zwei Radarobjekten an unterschiedlichen Winkelpositionen zuordnen lässt. Hierzu wird ein zweidimensionaler, d.h. in Abhängigkeit eines ersten Winkels und eines zweiten Winkels berechneter Suchraum durchsucht, um eine Korrelation zwischen dem gemessenen Signal und einem für eine Kombination von Winkeln erwarteten Signal aufzufinden.

Der Einzielschätzer 22 und der Zweizielschätzer 24 können beispielsweise als Algorithmus in der Signalverarbeitungseinheit 20 implementiert sein kann.

Zu jedem Messzyklus werden die im Falle von Objektreflexionen ermittelten Werte der Relativgeschwindigkeit v, des Objektabstands d und der geschätzten Richtungswinkel θᵢ, mit i = 1, ..., N+2, an eine Auswertungseinheit 26 ausgegeben. Die Anzahl der Richtungswinkel beträgt N Einzielschätzungen zuzüglich zwei Richtungswinkel für eine Zweizielschätzung.

Die Auswertungseinheit 26 umfasst optional eine Einrichtung 28 zur Erkennung einer Anwesenheit eines seitlich neben der eigenen Fahrspur in Fahrtrichtung ausgedehnten Gegenstandes 14, der von Radarobjekten reflektierte Radarsignale des Radarsensors zusätzlich reflektiert, wie beispielsweise einer Leitplanke. Die Einrichtung 28 erkennt beispielsweise die Anwesenheit einer Leitplanke an dem Auftreten von Radarechos einer Folge von Pfosten der Leitplanke. Pfosten einer Leitplanke stellen gut detektierbare Radarobjekte dar. Darüber hinaus kann Information über den seitlichen Abstand zur Leitplanke gewonnen werden. Im Falle der erkannten Anwesenheit einer Leitplanke oder eines ähnlichen, Radarwellen reflektierenden Gegenstandes 14 entlang der Fahrbahn oder seitlich neben der eigenen Fahrspur wird eine Objektdetektionseinheit 30 aktiviert, die dazu eingerichtet ist, Positionen von Radarobjekten unter Berücksichtigung der durch den Gegenstand 14 hervorgerufene Situation einer Mehrfachreflexion zu bestimmen.

Die Objektdetektionseinheit 30 umfasst eine Einheit 32, die dazu eingerichtet ist, basierend auf den Richtungswinkeln θᵢ und dem Objektabstand d eine Positionsverteilung lateraler Positionen dy zu bestimmen, die einer Verteilung der Richtungswinkel θᵢ entspricht. Dazu werden die Richtungswinkel θᵢ über den Objektabstand d in laterale Positionen dy bezogen auf die Längsachse des eigenen Fahrzeugs umgewandet. Die Verteilung wird beispielsweise jeweils aus einer Historie von ermittelten lateralen Positionen dy aus den n letzten Messzyklen bestimmt, wobei beispielsweise n = 5 oder n = 10 gewählt wird. Allgemein wird die Anzahl n der berücksichtigten Messzyklen so gewählt, dass in gewöhnlichen Fahrsituationen die Relativpositionen erfasster Fahrzeuge im wesentlichen unverändert bleiben. Es wird dabei von der Annahme ausgegangen, dass der laterale Abstand des Radarobjektes 12 zur Leitplanke sich nur langsam verändert und somit in dem betrachteten gleitenden Fenster der letzten Messzyklen im wesentlichen unverändert ist.

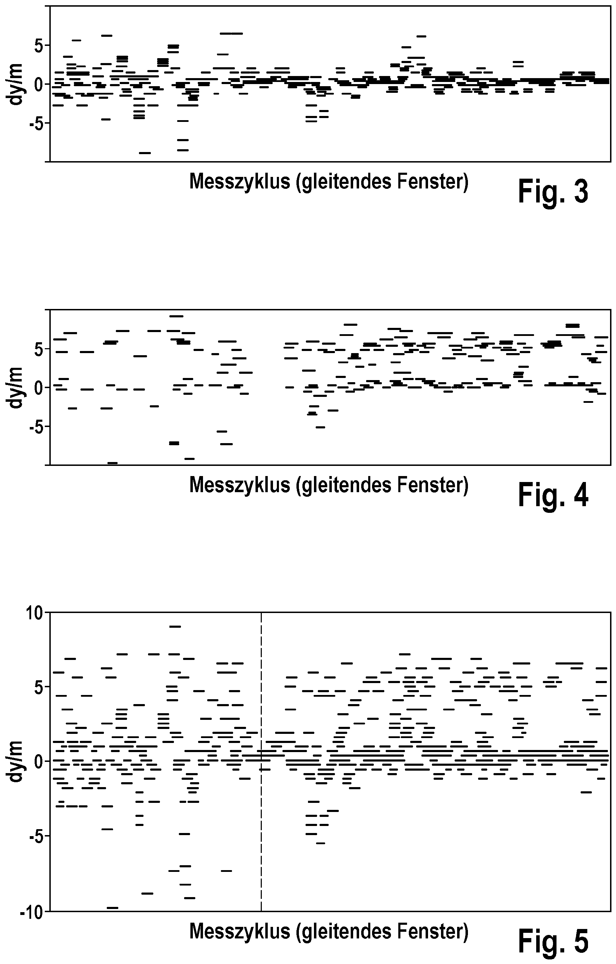

Fig. 3 zeigt beispielhaft einen zeitlichen Verlauf der Verteilung der Werte der lateralen Position dy entsprechend den vom Einzielschätzer 22 geschätzten Richtungswinkeln in einer beispielhaften Situation mit einem vorausfahrenden Fahrzeug, bei dem sich der Abstand von dem Fahrzeug (Radarobjekt 12) allmählich verringert, beispielsweise von 120m auf 40m, während das eigene Fahrzeug 10 und das vorausfahrende Fahrzeug in derselben Fahrspur unmittelbar neben einer Leitplanke fahren. Es ist die jeweilige, aktuell bestimmte Verteilung der lateralen Positionen dy über den im zeitlichen Verlauf aufeinanderfolgenden Messzyklen dargestellt. Die Verteilung wird jeweils für eine gleitendes Fenster der Messzyklen bestimmt.

Fig. 4 zeigt in einer entsprechenden Darstellung eine anhand der vom Zweizielschätzer 24 ermittelten Richtungswinkel bestimmte Verteilung der lateralen Positionen dy.

Fig. 5 zeigt in einer entsprechenden Darstellung den zeitlichen Verlauf einer Verteilung der lateralen Positionen dy entsprechend den zusammengeführten Verteilungen nach den Fig. 3 und 4, wobei eine ausgleichende Gewichtung der vom Einzielschätzer 22 und vom Zweizielschätzer 24 stammenden Werte vorgenommen wird. Beispielsweise liegen bei einem Messzyklus mit vier Frequenzrampen je Messzyklus maximal vier Richtungswinkel des Einzielschätzers 22 vor. Zu jedem Messzyklus wird nur eine Zweizielschätzung durchgeführt, so dass maximal zwei Richtungswinkel des Zweizielschätzers 24 vorliegen. Die Werte des Einzielschätzers 22 gehen daher einfach und die Werte des Zweizielschätzers 24 doppelt gewichtet in die von der Einheit 32 bestimmte Verteilung ein.

Die Objektdetektionseinheit 30 umfasst weiter eine Einheit 34, die dazu eingerichtet ist, die von der Einheit 32 bestimmte Verteilung der lateralen Position dy mit einem Modell einer unter Berücksichtigung des Vorhandenseins des entlang der Fahrbahn ausgedehnten Gegenstands erwarteten, von dem Abstand d abhängigen Positionsverteilung zu vergleichen, d.h. mit einem Modell einer lateralen Positionsverteilung, wie sie im Falle der erkannten Anwesenheit einer Leitplanke zu erwarten ist.

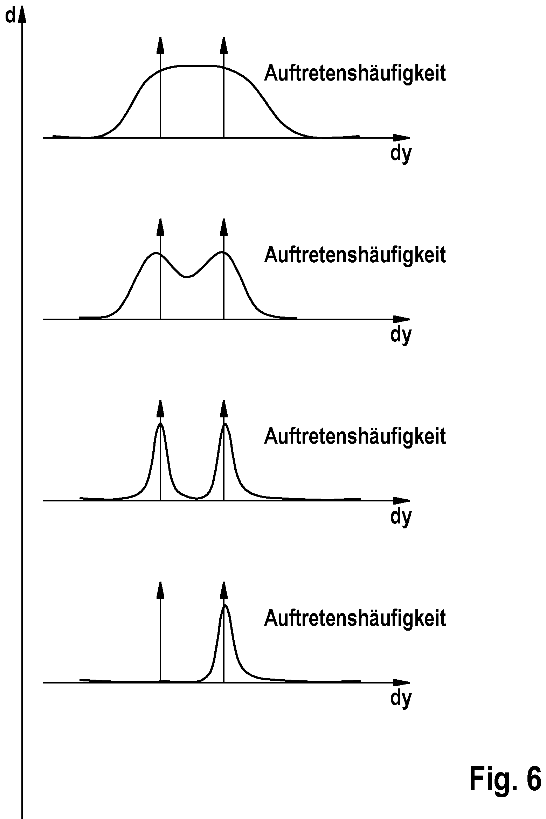

Fig. 6 zeigt beispielhaft vier verschiedene Modellphasen für die Verteilung der lateralen Positionen, die erwarteten Richtungswinkeln in Anwesenheit einer Leitplanke entsprechen, für unterschiedliche Abstände d von einem vorausfahrenden Fahrzeug. Dargestellt ist jeweils die erwartete Auftretenshäufigkeit einer geschätzten lateralen Position dy. Dabei sind in den dargestellten Verteilungen jeweils eine laterale Position des Radarobjektes 12 und eine laterale Position entsprechend einer Spiegelung des Radarobjektes 12 an der Leitplanke 14 durch Pfeile markiert. Die vom Objektabstand d abhängigen Modellphasen der erwarteten Verteilung der Richtungswinkel können beispielsweise für den jeweiligen Radarsensor vermessen werden und, beispielsweise in Form von charakteristischen Parametern, in der Einheit 34 gespeichert sein.

In einer ersten Modellphase sind aufgrund eines hohen Objektabstandes d die Richtungswinkel von Radarobjekt 12 und Spiegelobjekt 18 nicht trennbar. Es wird eine breite, zwischen den Winkelpositionen des Radarobjektes 12 und des Spiegelobjektes 18 gleichförmige Verteilung ohne ausgeprägte innere Maxima erwartet.

In einer zweiten Modellphase, die einem mittleren Objektabstand d entspricht, können relative Maxima entsprechend den Winkelpositionen des Radarobjektes 12 und des Spiegelobjektes 18 erkannt werden. Die Verteilung streut jedoch breit und umfasst auch Zwischenwerte entsprechend Geisterobjekten 19.

In einer dritten Modellphase, die einem geringen Objektabstand d entspricht, sind in der Verteilung die dem Radarobjekt 12 und dem Spiegelobjekt 18 zugeordneten Peaks deutlich voneinander abgegrenzt, d.h. separat. Entsprechend können die Richtungswinkel des Radarobjekts 12 und der Spiegelobjekts 18 voneinander getrennt werden.

Der Übergang zwischen den jeweiligen Modellphasen hängt im wesentlichen vom Objektabstand d und von der Richtungswinkel-Trennfähigkeit des Radarsensors 16 ab, darüber hinaus aber auch von dem lateralen Abstand dy des Radarobjektes 12 von der Leitplanke, da bei größerem seitlichem Abstand dy der Winkelunterschied zwischen dem Radarobjekt 12 und dem Geisterobjekt 18 größer ist.

In einem vierten Modell, das einem Nahbereich mit noch geringerem Objektabstand d entspricht, werden keine indirekten Objektreflexionen von der Leitplanke empfangen. In der Verteilung der lateralen Positionen dy ergibt sich nur ein Peak entsprechend dem Richtungswinkel des Radarobjektes 12.

In Fig. 5 ist beispielsweise während der Messzyklen links von einem durch eine gestrichelte Linie dargestellten Zeitpunkt eine breite Verteilung der dy zu erkennen, die, insbesondere unter Beachtung der in Fig. 4 dargestellten Werte des Zweizielschätzers 24, schwach ausgeprägte Maxima bei zwei Werten etwa bei dy = 0 m und dy = 5 m zeigt.

Die Einheit 34 erkennt hier aufgrund eines Vergleichs mit den Modellphasen die zweite Modellphase als zutreffend. Die Einheit 34 bestimmt daher die fahrbahnseitig der Leitplanke liegende laterale Position, die dem rechten Pfeil in Fig. 6 entspricht, als laterale Objektposition dy. Die von der Einheit 34 bestimmte laterale Objektposition dy, oder ein entsprechender Richtungswinkel 8, wird von der Objektdetektionseinheit 30 als Objektposition detektiert und mit der Relativgeschwindigkeit v und dem Objektabstand d beispielsweise an eine Objekttracking-Einheit 36 ausgegeben. Die Objekttracking-Einheit 36 ist in an sich bekannter Weise dazu eingereichtet, vom Radarsensor 16 erfasste Radarobjekte zu verfolgen und zu verwalten. Sie ist beispielsweise mit einem Fahrgeschwindigkeitsregler 38 verbunden, der eine adaptive Fahrgeschwindigkeitsregelung ermöglicht.

In den in Fig. 5 rechts von der gestrichelten Linie dargestellten Verteilungen der lateralen Positionen dy erkennt die Einheit 34 das Vorliegen einer Situation entsprechend der dritten Modellphase. Die auftretenden Werte bei der lateralen Position von ungefähr d = 5 sind von denjenigen bei der lateralen Position y = 0 klar zu trennen. Die Einheit 34 bestimmt daher als laterale Objektposition dy den Wert des Maximums fahrbahnseitig der Leitplanke und gibt wiederum diese laterale Position dy oder einen entsprechenden Richtungswinkel θ an die Objekttracking-Einheit 36 aus.

Durch die Objektdetektionseinheit 30 kann somit bei erkannter Anwesenheit einer Leitplanke die Objektdetektion verbessert werden, indem mehrere zunächst detektierte Richtungswinkel θᵢ nur einem Radarobjekt 12 zugeordnet werden. Die Objektdetektion kann somit insbesondere in Situationen entsprechend der ersten oder zweiten Modellphase verbessert werden, da keine Spiegelobjekte 18 und keine Geisterobjekte 19 in das Objekttracking aufgenommen werden. Dies kann darüber hinaus eine verbesserte Erkennung von komplexen Verkehrssituationen ermöglichen, beispielsweise einer Gassenfahrt zwischen stehenden Radarobjekten oder einer Verkehrssituation mit zwei mit annähernd gleicher Geschwindigkeit vorausfahrenden Fahrzeugen, da eine solche Situation besser von der in Fig. 1 dargestellten Situation unterschieden werden kann.

In Situationen ohne Mehrfachreflexion, oder wenn bei einer Variante ohne die Einrichtung 28 die Objektdetektionseinheit 30 keines der beschriebenen Modelle als zutreffend erkannt hat, erfolgt durch die Auswertungseinheit 26 beispielsweise direkt eine Weitergabe der ermittelten Werte der Relativgeschwindigkeit v, des Objektabstands d und der Richtungswinkel θᵢ an die Objekttracking-Einheit 36.

Die Auswertungseinheit 26 und/oder die Einheiten 30, 32, 34, 36 können beispielsweise in Form von Algorithmen einer digitalen Datenverarbeitungseinrichtung implementiert sein.

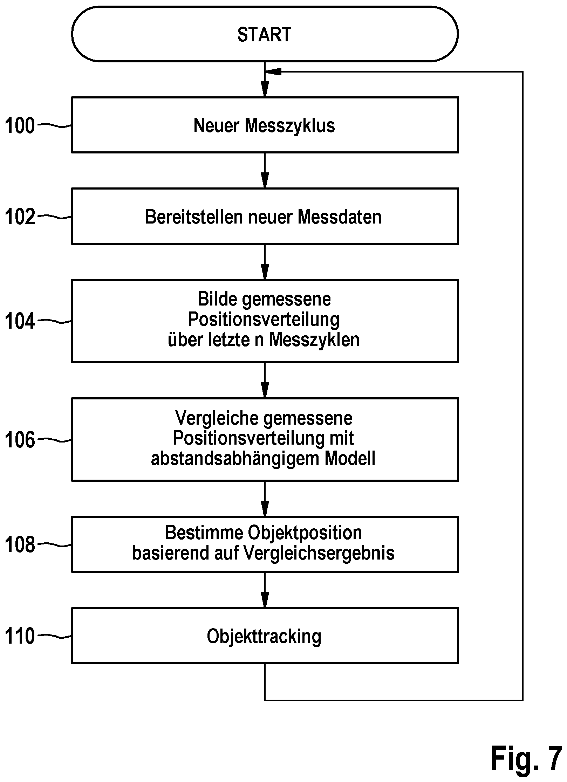

Fig. 7 zeigt ein Ablaufdiagramm eines Verfahrens zur Detektion von Radarobjekten 12 mit einem winkelauflösenden Radarsensor 16 eines Kraftfahrzeugs 10 in Gegenwart eines seitlich neben der eigenen Fahrspur in Fahrtrichtung ausgedehnten, Radarwellen reflektierenden Gegenstands 14. Das Verfahren entspricht beispielsweise der beschriebenen Betriebsweise des anhand von Fig. 1 bis Fig. 6 erläuterten Systems.

Der dargestellte Ablauf beginnt in Schritt 100 mit einem neuen Messzyklus des Radarsensors 16, der beispielsweise vier Frequenzmodulationsrampen umfasst.

In Schritt 102 werden dem neuen Messzyklus zugehörige, neue Messdaten bereitgestellt, insbesondere im Falle von gemessenen Radarreflexionen von einem Radarobjekt 12 die Relativgeschwindigkeit v, der Objektabstand d und die Richtungswinkel θᵢ. Diese werden beispielsweise von der digitalen Signalverarbeitungseinheit 20 zur Verfügung gestellt.

In Schritt 104 wird die gemessene Positionsverteilung über die letzten Messzyklen, insbesondere die n letzten Messzyklen, gebildet. Bei der Positionsverteilung kann es sich beispielsweise um die Verteilung der lateralen Position dy oder um die Verteilung der Winkelpositionen θᵢ, d.h. der Richtungswinkel, handeln.

In Schritt 106 erfolgt ein Vergleich der gemessenen Positionsverteilung mit einem Modell der vom Objektabstand abhängigen, erwarteten Positionsverteilung. Es ist anzumerken, dass die Verteilung im Falle eines Neubeginns des Verfahrens zunächst über die notwendige Anzahl von Messzyklen aufgebaut wird, bevor in Schritt 106 ein Vergleich mit dem Modell erfolgt.

In Schritt 108 wird, basierend auf dem durchgeführten Vergleich, eine Objektposition eines Radarobjektes 12 bestimmt, beispielsweise durch die Einheit 34.

Daran kann sich ein Schritt 110 des Objekttrackings bzw. der Objektverwaltung anschließen, und das Verfahren wird mit, beginnend mit dem Schritt 100 eines neuen Messzyklus, wiederholt.

## Patentansprüche

1. Verfahren zur Detektion von Radarobjekten (12) mit einem winkelauflösenden Radarsensor (16) eines Kraftfahrzeugs (10) in Gegenwart eines seitlich neben der eigenen Fahrspur in Fahrtrichtung ausgedehnten, Radarwellen reflektierenden Gegenstands (14), **gekennzeichnet durch** die Schritte:
- Vergleichen einer gemessenen Positionsverteilung, die einer Verteilung von Richtungswinkeln empfangener, von einem Radarobjekt (12) reflektierter Radarsignale des Radarsensors (16) entspricht, mit einem Modell einer unter Berücksichtigung des Vorhandenseins des neben der eigenen Fahrspur in Fahrtrichtung ausgedehnten Gegenstands (14) erwarteten, von einem Abstand (d) vom Radarobjekt (12) abhängigen Positionsverteilung; und
- Bestimmen einer Position (dy) eines Radarobjektes (12), basierend auf dem Ergebnis des Vergleichs,
wobei das von dem Abstand vom Radarobjekt (12) abhängige Modell mehrere Modellphasen umfasst, die erwarteten Positionsverteilungen entsprechen, welche sich unterscheiden,
wobei das Verfahren umfasst: Erkennen einer der Modellphasen als zutreffend, und
wobei wenigstens eine Modellphase einer erwarteten Positionsverteilung entspricht, welche Positionen entsprechend der Winkelposition des Radarobjektes (12) und der Winkelposition des Spiegelobjektes (18) aufweist und Zwischenwerte aufweist, und wobei bei Erkennen dieser Modellphase als zutreffend eine Position als Position (dy) des Radarobjektes bestimmt wird, die einer fahrbahnseitig des Gegenstands (14) liegenden Winkelposition des Radarobjektes (12) entspricht.

2. Verfahren nach Anspruch 1, mit dem vor dem Schritt des Vergleichens ausgeführten Schritt:
- Bestimmen der gemessenen Positionsverteilung aus einer fortlaufend aktualisierten Historie von Positionen (dy), die Richtungswinkeln empfangener, von einem Radarobjekt (12) reflektierter Radarsignale des Radarsensors (16) entsprechen, wobei die als gemessene Positionsverteilung bestimmte Positionsverteilung Positionen entsprechend den in mehreren letzen Messzyklen gemessenen Richtungswinkeln umfasst.

3. Verfahren nach Anspruch 2, wobei das Bestimmen der gemessenen Positionsverteilung basierend auf empfangenen Radarsignalen aus mehreren Messzyklen des Radarsensors (16) erfolgt, wobei zu jedem Messzyklus aus in dem Messzyklus empfangenen Radarsignalen Information über wenigstens eine Position (dy) bestimmt wird, die einem Richtungswinkel empfangener, von einem Radarobjekt (12) reflektierter Radarsignale des Radarsensors (16) entspricht.

4. Verfahren nach einem der vorstehenden Ansprüche, bei dem das von dem Abstand vom Radarobjekt (12) abhängige Modell mehrere Modellphasen umfasst, die erwarteten Positionsverteilungen entsprechen, die sich in Bezug auf ein Vorhandensein und/oder eine Ausgeprägtheit einer Absenkung der Verteilung in einem Übergangsbereich zwischen Positionen, die einer Position des Radarobjektes (12) und einer Position eines Spiegelobjektes (18) entsprechen, unterscheiden.

5. Verfahren nach einem der vorstehenden Ansprüche, bei dem das von dem Abstand vom Radarobjekt (12) abhängige Modell mehrere Modellphasen umfasst, die erwarteten Positionsverteilungen entsprechen, die jeweils eine Streuung von Werten der Verteilung um eine Position entsprechend einem Radarobjekt (12) und um eine Position entsprechend einem Spiegelobjekt (18) aufweisen und sich hinsichtlich einer von dem Abstand vom Radarobjekt (12) abhängigen Streubreite unterscheiden.

6. Verfahren nach einem der vorstehenden Ansprüche, bei dem das von dem Abstand vom Radarobjekt (12) abhängige Modell mehrere Modellphasen umfasst, die erwarteten Positionsverteilungen entsprechen, wobei in wenigstens einer Modellphase eine zumindest zwischen einer Position des Radarobjektes (12) und einer Position eines Spiegelobjektes (18) gleichförmig streuende Positionsverteilung erwartet wird, und wobei in wenigstens einer Modellphase eine Positionsverteilung mit zwei getrennten, jeweils einer Position des Radarobjektes (12) und einer Position eines Spiegelobjektes (18) entsprechenden Peaks erwartet wird.

7. Verfahren nach einem der vorstehenden Ansprüche, bei dem das von dem Abstand vom Radarobjekt (12) abhängige Modell mehrere Modellphasen umfasst, die erwarteten Positionsverteilungen entsprechen, wobei in wenigstens einer der Modellphasen die erwartete Positionsverteilung zwei Peaks an Positionen, die einer Position des Radarobjektes (12) und einer Position eines Spiegelobjektes (18) entsprechen, aufweist, und wobei in wenigstens einer der Modellphasen die erwartete Positionsverteilung nur einen Peak an einer Position, die einer Position des Radarobjektes (12) entspricht, aufweist.

8. Verfahren nach einem der vorstehenden Ansprüche, mit dem Schritt:
- Bestimmen der zutreffenden Modellphase des Modells, basierend auf dem Ergebnis des Vergleichs, wobei die Modellphase bestimmt wird aus mehreren Modellphasen des Modells, und wobei der Schritt des Vergleichens ein Vergleichen der gemessenen Positionsverteilung mit den mehreren Modellphasen umfasst.

9. System zur Detektion von Radarobjekten (12) mit einem winkelauflösenden Radarsensor (16) eines Kraftfahrzeugs (10) in Gegenwart eines seitlich neben der eigenen Fahrspur in Fahrtrichtung ausgedehnten, Radarwellen reflektierenden Gegenstands (14), aufweisend:
- eine Einheit (32), die dazu eingerichtet ist, eine gemessene Positionsverteilung zu bestimmen, die eine Verteilung von Richtungswinkeln empfangener, von einem Radarobjekt (12) reflektierter Radarsignale des Radarsensors (16) entspricht,
**dadurch gekennzeichnet, dass** das System weiter aufweist:
- eine Einheit (34), die dazu eingerichtet ist, die gemessene Positionsverteilung mit einem Modell einer unter Berücksichtigung des Vorhandenseins des neben der eigenen Fahrspur in Fahrtrichtung ausgedehnten Gegenstands (14) erwarteten, von einem Abstand (d) vom Radarobjekt (12) abhängigen Positionsverteilung zu vergleichen; und
- eine Einheit (34), die dazu eingerichtet ist, basierend auf dem Ergebnis des Vergleichs eine Position (dy) eines Radarobjektes (12) zu bestimmen,
wobei das System eingerichtet ist zur Durchführung des Verfahrens nach einem der Ansprüche 1 bis 8.

## Claims

1. Method for detecting radar objects (12) using an angle-resolving radar sensor (16) of a motor vehicle (10) in the presence of an item (14) which is extended laterally alongside the motor vehicle's own lane in the direction of travel and reflects radar waves, **characterized by** the steps of:
- comparing a measured position distribution, which corresponds to a distribution of direction angles of received radar signals from the radar sensor (16) which are reflected by a radar object (12), with a model of a position distribution which is expected taking into account the presence of the item (14) extended alongside the motor vehicle's own lane in the direction of travel and is dependent on a distance (d) from the radar object (12); and
- determining a position (dy) of a radar object (12) on the basis of the result of the comparison,
the model which is dependent on the distance from the radar object (12) comprising a plurality of model phases corresponding to expected position distributions which differ,
the method comprising: identifying one of the model phases as appropriate, and
at least one model phase corresponding to an expected position distribution having positions corresponding to the angular position of the radar object (12) and to the angular position of the mirror object (18) and having intermediate values, and a position being determined as the position (dy) of the radar object when this model phase is identified as appropriate, said position (dy) corresponding to an angular position of the radar object (12) in the lane of the item (14).

2. Method according to Claim 1, having the following step which is carried out before the comparison step:
- determining the measured position distribution from a continuously updated history of positions (dy) which correspond to direction angles of received radar signals from the radar sensor (16) which are reflected by a radar object (12), the position distribution determined as the measured position distribution comprising positions corresponding to the direction angles measured in a plurality of last measurement cycles.

3. Method according to Claim 2, the measured position distribution being determined on the basis of received radar signals from a plurality of measurement cycles of the radar sensor (16), information relating to at least one position (dy) being determined for each measurement cycle from radar signals received in the measurement cycle, which position (dy) corresponds to a direction angle of received radar signals from the radar sensor (16) which are reflected by a radar object (12).

4. Method according to one of the preceding claims, in which the model which is dependent on the distance from the radar object (12) comprises a plurality of model phases corresponding to expected position distributions which differ with respect to a presence and/or distinctiveness of a drop in the distribution in a transition area between positions corresponding to a position of the radar object (12) and to a position of a mirror object (18).

5. Method according to one of the preceding claims, in which the model which is dependent on the distance from the radar object (12) comprises a plurality of model phases corresponding to expected position distributions which each have a scattering of values of the distribution around a position corresponding to a radar object (12) and around a position corresponding to a mirror object (18) and differ with respect to a scatter range which is dependent on the distance from the radar object (12).

6. Method according to one of the preceding claims, in which the model which is dependent on the distance from the radar object (12) comprises a plurality of model phases corresponding to expected position distributions, a position distribution which provides uniform scatter at least between a position of the radar object (12) and a position of a mirror object (18) being expected in at least one model phase, and a position distribution having two separate peaks respectively corresponding to a position of the radar object (12) and to a position of a mirror object (18) being expected in at least one model phase.

7. Method according to one of the preceding claims, in which the model which is dependent on the distance from the radar object (12) comprises a plurality of model phases corresponding to expected position distributions, the expected position distribution having two peaks at positions corresponding to a position of the radar object (12) and to a position of a mirror object (18) in at least one of the model phases, and the expected position distribution having only one peak at a position corresponding to a position of the radar object (12) in at least one of the model phases.

8. Method according to one of the preceding claims, having the step of:
- determining the appropriate model phase of the model on the basis of the result of the comparison, the model phase being determined from a plurality of model phases of the model, and the comparison step comprising a comparison of the measured position distribution with the plurality of model phases.

9. System for detecting radar objects (12) with an angle-resolving radar sensor (16) of a motor vehicle (10) in the presence of an item (14) which is extended laterally alongside the motor vehicle's own lane in the direction of travel and reflects radar waves, having:
- a unit (32) which is set up to determine a measured position distribution corresponding to a distribution of direction angles of received radar signals from the radar sensor (16) which are reflected by a radar object (12),
**characterized in that** the system also has:
- a unit (34) which is set up to compare the measured position distribution with of model of a position distribution which is expected taking into account the presence of the item (14) extended alongside the motor vehicle's own lane in the direction of travel and is dependent on a distance (d) from the radar object (12); and
- a unit (34) which is set up to determine a position (dy) of a radar object (12) on the basis of the result of the comparison,
the system being set up to carry out the method according to one of Claims 1 to 8.

## Revendications

1. Procédé de détection d'objets radars (12) comportant un capteur radar (16) à résolution angulaire d'un véhicule (10) en présence d'un objet (14) s'étendant latéralement sur le côté de la voie de circulation concernée dans la direction de circulation et réfléchissant les ondes radar, **caractérisé par** les étapes consistant à :
- comparer une distribution de position mesurée qui correspond à une distribution de signaux radar du capteur radar (16), reçus en provenance de différents angles de direction et réfléchis par un objet radar (12), à un modèle d'une distribution de positions attendue lorsqu'il est tenu compte de la présence de l'objet (14) s'étendant sur le côté de la voie de circulation concernée dans la direction de circulation, et dépendant d'une distance (d) de l'objet radar (12) ; et
- déterminer une position (dy) d'un objet radar (12) sur la base du résultat de la comparaison,
dans lequel le modèle dépendant de la distance de l'objet radar (12) comprend plusieurs phases de modèle qui correspondent à des distributions de positions attendues différentes les unes des autres,
dans lequel le procédé consiste à : identifier l'une des phases du modèle comme étant applicable, et
dans lequel au moins une phase du modèle correspond à une distribution de positions attendue qui comportent des positions correspondant à la position angulaire de l'objet radar (12) et à la position angulaire de l'objet miroir (18) et qui comportent des valeurs intermédiaires, et dans lequel, lors de l'identification de ladite phase du modèle comme étant applicable, une position est déterminée comme étant la position (dy) de l'objet radar qui correspond à une position angulaire de l'objet radar (12) côté chaussée de l'objet (14).

2. Procédé selon la revendication 1, comportant l'étape réalisée avant l'étape de comparaison, consistant à :
- déterminer la distribution de positions mesurée à partir de l'historique préalablement actualisé des positions (dy) qui correspondent à des angles de direction de signaux radar reçus et réfléchis par un objet radar (12) du capteur radar (16), dans lequel la distribution de positions déterminée en tant que distribution de positions mesurée comprend des positions correspondant aux angles de direction mesurés au cours des derniers cycles de mesure.

3. Procédé selon la revendication 2, dans lequel la détermination de la distribution de positions mesurée est effectuée sur la base de signaux radar reçus à partir de plusieurs cycles de mesure du capteur radar (16), dans lequel, lors de chaque cycle de mesure, des informations concernant au moins une position (dy) est déterminée à partir de signaux radar reçus au cours du cycle de mesure, laquelle position correspond à un angle de direction de signaux radar du capteur radar (16), reçus et réfléchis par un objet radar (12).

4. Procédé selon l'une quelconque des revendications précédentes, dans lequel le modèle dépendant de la distance de l'objet radar (12) comprend plusieurs phases de modèle qui correspondent à des distributions de positions attendues qui sont différentes les unes des autres en ce qui concerne une présence et/ou une valeur d'une diminution de la distribution dans une zone de transition entre les positions qui correspondent à une position de l'objet radar (12) et à une position d'un objet miroir (18).

5. Procédé selon l'une quelconque des revendications précédentes, dans lequel le modèle dépendant de la distance de l'objet radar (12) comprend plusieurs phases de modèle qui correspondent à des distributions de positions attendues qui comprennent une dispersion de valeurs de la distribution autour d'une position correspondant à un objet radar (12) et autour d'une position correspondant à un objet miroir (18) et qui diffèrent les unes des autres en ce qui concerne un intervalle de dispersion en fonction de la distance de l'objet radar (12).

6. Procédé selon l'une quelconque des revendications précédentes, dans lequel le modèle dépendant de la distance de l'objet radar (12) comprend plusieurs phases de modèle qui correspondent à des distributions de positions attendues, dans lequel une distribution de positions ayant une dispersion uniforme est attendue dans au moins une phase du modèle au moins entre une position de l'objet radar (12) et une position d'un objet miroir (18), et dans lequel une distribution de positions comportant deux pics séparés correspondant respectivement à une position de l'objet radar (12) et à une position d'un objet miroir (18) est attendue dans au moins une phase du modèle.

7. Procédé selon l'une quelconque des revendications précédentes, dans lequel le modèle dépendant de la distance de l'objet radar (12) comprend plusieurs phases de modèle qui correspondent à des distributions de positions attendues, dans lequel la distribution de positions attendue présente au moins deux pics dans au moins l'une des phases du modèle, qui correspondent à une position de l'objet radar (12) et à une position d'un objet miroir (18), et dans lequel la distribution de positions attendue ne présente qu'un seul pic dans au moins l'une des phases du modèle, à une position qui correspond à une position de l'objet radar (12).

8. Procédé selon l'une quelconque des revendications précédentes, comportant l'étape consistant à :
- déterminer la phase de modèle applicable du modèle sur la base du résultat de la comparaison, dans lequel la phase de modèle est déterminée à partir de plusieurs phases de modèle du modèle, et dans lequel l'étape de comparaison comprend une comparaison de la distribution de positions mesurée aux multiples phases de modèle.

9. Procédé de détection d'objets radars (12) au moyen d'un capteur radar (16) à résolution angulaire d'un véhicule (10) en présence d'un objet (14) s'étendant latéralement sur le côté de la voie de circulation concernée dans la direction de circulation et réfléchissant les ondes radar, comportant :
- une unité (32) qui est conçue pour déterminer une distribution de positions mesurée qui correspond à une distribution d'angles de direction de signaux radar reçus et réfléchis par un objet radar (12) du capteur radar (16),
**caractérisé en ce que** le système comporte en outre :
- une unité (34) qui est conçue pour comparer la distribution de positions mesurée à un modèle d'une distribution de positions attendue lorsqu'il est tenu compte de la présence de l'objet (14) sur le côté de la voie de circulation concernée dans la direction de circulation et dépendant d'une distance (d) de l'objet radar (12) ; et
- une unité (34) qui est conçue pour déterminer une position (dy) d'un objet radar (12) sur la base du résultat de la comparaison,
dans lequel le système est conçu pour mettre en oeuvre le procédé selon l'une quelconque des revendications 1 à 8.
